# EUROPÄISCHE PATENTANMELDUNG

(11) **EP 1 048 927 A2**
(43) Veröffentlichungstag der Anmeldung: **02.11.2000**
(21) Anmeldenummer: 00106372.6
(22) Anmeldetag: 24.03.2000
(51) Int. Cl.: G01B 21/04

(54) **Optischer Kollisionsschutz für bewegte Maschinenteile**

(30) Priorität: 28.04.1999 DE 19919253
(71) Anmelder: Carl Zeiss, 89518 Heidenheim (Brenz) (DE); Carl-Zeiss-Stiftung trading as Carl Zeiss, 89518 Heidenheim (Brenz) (DE)
(72) Erfinder: Wagner, Eberhard, Prof. Dr.-Ing., 73614 Schorndorf (DE)

(57) **Zusammenfassung**

Es wird ein optischer Kollisionsschutz für bewegte Maschinenteile in Form einer Lichtschranke umfassend eine Sendeschaltung (17) mit einer Vielzahl nebeneinander angeordneter pulsierend betriebener Lichtsendern (S₁₁ bis S_{1N}) und eine Auswerteschaltung (18) mit wenigstens einem Lichtdetektor (D₁₁ bis D_{NM}) vorgestellt. Um sicher durch die Auswerteschaltung feststellen zu können von welchem Lichtsender ein durch den Lichtdetektor empfangener Lichtpuls gesendet wurde, ist der Kollisionsschutz hierbei derart ausgestaltet, daß die Lichtpulse zumindest zweier Lichtsender immer zu unterschiedlichen Zeitpunkten (t₁, t₂, ...) ausgesandt werden.

## Beschreibung

Die Erfindung zeigt einen optischen Kollisionsschutz für bewegte Maschinenteile in Form einer Lichtschranke umfassend eine Sendeschaltung mit wenigstens zwei pulsierend betriebenen Lichtsendern und eine Auswerteschaltung mit wenigstens einem Lichtdetektor.

Ein derartiger Kollisionsschutz ist beispielsweise aus der DE 35 14 444 A1 bekannt. Hierin ist ein Koordinatenmeßgerät gezeigt, bei dem, wie bei Koordinatenmeßgeräten üblich, ein Tastkopf, mit dem ein zu vermessendes Werkstück angetastet wird, über eine entsprechende Mechanik in allen drei senkrecht aufeinander stehenden Koordinatenrichtungen bewegt werden kann. Der Tastkopf ist in dem gezeigten Koordinatenmeßgerät an einem horizontalen Meßarm befestigt, der entlang seiner Längsrichtung bewegt werden kann. Zum Schutz des horizontalen Meßarms vor einer Kollision mit beispielsweise dem Bediener des Koordinatenmeßgerätes sind um den gesamten Meßarm herum ähnlich einem Vorhang eine Vielzahl von nebeneinander liegenden Lichtschranken vorgesehen, an deren einen Ende sich eine superhelle Leuchtdiode zur Aussendung des Lichts und an deren anderen Ende sich entsprechende Fototransistoren zur Aufnahme des Lichts befinden. Um eine eindeutige Zuordnung der diversen ausgesandten Lichtstrahlen zu je einem Fototransistor zu gewährleisten, befinden sich die Lichtsender in einer Spezialfassung mit hochglanzpoliertem Reflektor und einer Linse. Außerdem ist auf Empfängerseite jedem Fototransistor ein gesondertes Bauteil mit einer Schutzsenkung vorgeschaltet, das zentrisch jeweils entweder eine Bohrung oder ein zusätzliches Kapillarrohr aufnimmt. Hierdurch soll gewährleistet werden, daß der entsprechende Fototransistor nur den einen zugeordneten Lichtstrahl empfängt und andere Lichtstrahlen hierdurch abgeschirmt werden.

Der in der bezeichneten Druckschrift gezeigte Kollisionsschutz weist eine Reihe von Besonderheiten auf. So ist zunächst einmal festzustellen, daß zur Zuordnung eines Empfängers zu einem ausgewählten Lichtstrahl eine Reihe von relativ aufwendigen Maßnahmen vorgenommen werden müssen. Zum einen müssen, wie bereits oben ausgeführt, eine superhelle Leuchtdiode mit hochglanzpoliertem Reflektor und einer Linse bereitgestellt werden, auf der anderen Seite muß ein Bauteil vorhanden sein, welches zentrisch jeweils eine Bohrung oder sogar ein Kapillarrohr aufnehmen kann. Da die Bohrung bzw. das Kapillarrohr dazu dienen nur exakt parallele Strahlen auf den Fototransistor durchzulassen, müssen die superhelle Leuchtdiode und die Bohrung bzw. das Kapillarrohr darüber hinaus relativ aufwendig so lange justiert werden, bis die Lichtstrahlen exakt parallel zur Bohrung bzw. dem Kapillarrohr verlaufen. Um darüber hinaus vom Fototransistor ein ausreichend starkes Signal zu erhalten muß es sich beim Lichtsender, wie auch wortwörtlich in der betreffenden Druckschrift beschrieben, um eine superhelle Leuchtdiode handeln, da sonst die durch die Bohrung bzw. das Kapillarrohr abgeschirmte Lichtleistung nicht mehr ausreichen würde, um im Fototransistor ein Signal zu erzeugen.

Hiervon ausgehend liegt unserer Erfindung die Aufgabe zugrunde, den Kollisionsschutz dahingehend zu vereinfachen, daß die Zuordnung eines Lichtsenders zum zugehörigen Lichtdetektor erleichtert wird.

Diese Aufgabe wird gemäß dem kennzeichnenden Teil des Anspruches 1 dadurch gelöst, daß die Lichtpulse zumindest zweier Lichtsender immer zu unterschiedlichen Zeitpunkten ausgesandt werden.

Hierdurch kann nunmehr an Hand des konkreten Zeitpunktes, zu dem der Lichtpuls von der Auswerteschaltung detektiert wird unterschieden werden, von welchem von mehreren nebeneinander liegenden Lichtsendern der Lichtpuls ausgesandt wurde. Es ist folglich also nicht mehr zwingend notwendig, daß ein Lichtdetektor nur das Licht von einem einzigen zugeordneten Lichtsender empfangen kann, um festzustellen, ob ein Lichtpuls unterbrochen wurde. Hierdurch ergeben sich eine Reihe von erheblichen Vorteilen:

Zunächst einmal kann nunmehr vollkommen auf das zusätzliche Bauteil mit den Schutzsenkungen und den zentrisch ausgeführten Bohrungen bzw. Kapillarrohren verzichtet werden. Infolge des Verzichts auf dieses Bauteil kann weiterhin auch die Intensität des Lichtsenders gesenkt werden. da durch die Bohrungen bzw. die Kapillarröhre des Bauteils nunmehr kein Licht mehr geschluckt wird. Desweiteren kann auch auf eine aufwendige Justage der Bohrungen bzw. der Kapillarröhren in Richtung der Strahlachse des durch die Lichtsender ausgesandten Lichtstrahls verzichtet werden.

Die Ausführung der Erfindung ist in einer großen Variationsbreite möglich. So ist hinsichtlich der durch die Lichtsender gesandten Lichtpulse auszuführen, daß hier eine Vielzahl von Variationen denkbar ist. In einer besonders vorteilhaften Ausführungsform werden die Lichtsender so von der Sendeschaltung angesteuert, daß immer nur von einem Lichtsender zur Zeit ein Lichtpuls ausgesandt wird. Hierdurch kann über das Vorhandensein oder das Nichtvorhandensein eines Signales an dem jeweils zugeordneten Lichtdetektor zu einem definierten Zeitpunkt exakt festgestellt werden, welcher der Lichtstrahlen durch eine entsprechende Kollision unterbrochen wurde.

In einer anderen Ausführungsform ist es jedoch genauso möglich, daß mehrere der Lichtsender gleichzeitig einen Lichtpuls aussenden. Dies ist allerdings nur dann möglich, wenn die gleichzeitig einen Lichtpuls aussendenden Lichtsender und die betreffenden zugeordneten Lichtdetektoren so angeordnet sind, daß jeder dieser betreffenden zugeordneten Lichtdetektoren jeweils nur den Lichtpuls von dem einen zugeordneten Lichtsender dieser gleichzeitig aussendenden Lichtsender detekieren kann. Beispielsweise kann dies realisiert werden, wenn es sich bei dem zu schützenden Teil um ein Maschinenteil mit viereckigem Querschnitt handelt und jeweils aufjeder der vier Seiten des viereckigen Querschnittes einer der gleichzeitig einen Lichtpuls sendenden Lichtsender und der zugehörige Lichtdetektor angeordnet werden, so daß der Lichtpuls eines der betreffenden Lichtsender dann nicht an die betreffenden Lichtdetektoren auf den jeweils drei anderen Seiten des Maschinenteils gelangen kann, da dieser durch das Bauteil abgeschirmt wird.

Auch der Lichtsender und der Lichtdetektor können vielfältig variieren. Beispielsweise könnte es sich bei dem Lichtsender um einen Halbleiterlaser handeln, um helle Leuchtdioden oder um einfache Glühbirnen. Auch die Lichtdetektoren können vielfältig variieren. Beispielsweise kann es sich bei den Lichtdetektoren um Fototransistoren, um Fotodioden oder um Solarzellen handeln. Um jedoch den Kollisionsschutz möglichst resistent gegen Umgebungslicht zu gestalten. wird man besonders vorteilhaft im infraroten Bereich arbeiten. Hierfür bietet sich als Lichtsender insbesondere eine Infrarotdiode an sowie als Lichtdetektor ein oben bereits genannter Fototransistor oder eine Fotodiode, die vorteilhaft zusätzlich mit einem entsprechenden Infrarorfilter bestückt werden kann.

Um die von den Lichtdetektoren gelieferten Signale vernünftig auswerten zu können, sollte die Auswerteschaltung wenigstens einen Verstärker umfassen, der das Signal des Lichtdetektors verstärkt. Es könnte sich in einem einfachen Fall um einen einfachen Operationsverstärker handeln.

Um an den besagten Lichtdetektoren ausreichend große Signale zu erzeugen, die durch die besagte Auswerteschaltung entsprechend ausgewertet werden können, würden dann auf Grund der Störeinflüsse dennoch immer noch relativ hohe Intensitäten benötigt. Um die notwendigen Intensitäten weiter zu verringern ist es besonders vorteilhaft, wenn der in der Auswerteschaltung vorgesehene Verstärker ein selektiver Verstärker ist, der das Signal des Lichtdetektors filtert und nur die gefilterten Bestandteile verstärkt. Durch die Verwendung des besagten selektiven Verstärkers können selektiv die im Lichtpuls enthaltenen Frequenzen in einem bandpaßähnlichem Verhalten durchgelassen werden und störendes Rauschen herausgefiltert werden. Mit dieser Maßnahme kann die notwendige Intensität des Lichtsenders noch einmal ganz erheblich reduziert werden.

Insbesondere selektive Verstärker sind jedoch derzeit nicht ganz billig. Der Kollisionsschutz ist deshalb besonders vorteilhaft derart ausgestaltet, daß wenigstens zwei Lichtdetektoren gemeinsam an einen Verstärker oder insbesondere an einen selektiven Verstärker angeschlossen sind. Hierdurch läßt sich über einen Verstärker oder einen selektiven Verstärker das Licht von zwei und mehr Lichtdetektoren verstärken. Eine wesentliche Vorbedingung zum Betrieb einer derartigen Auswerteschaltung ist allerdings, daß alle einem Verstärker bzw. selektiven Verstärker zugeordneten Lichtdetektoren und Lichtsender derart angeordnet sich, daß jeder dieser betreffenden Lichtdetektoren den Lichtpuls des jeweils zugeordneten Lichtsenders empfangen kann während er die Lichtpulse der restlichen dem selektiven Verstärker zugeordneten Lichtsender nicht empfangen kann. Wie bereits oben beschrieben, läßt sich dies besonders vorteilhaft bewerkstelligen, indem auf unterschiedlichen Seiten des beweglichen Maschinenteils jeweils einer dieser Lichtsender und der zugehörige Lichtdetektor angeordnet werden, sodaß das Maschinenteil die Lichpulse der anderen dem selektiven Verstärker zugeordneten Lichtsender abschattet. Als weitere wichtige Vorbedingung müssen die betreffenden Lichtsender von der Sendeschaltung so angesteuert werden, daß zu einem gegebenen Zeitpunkt immer nur einer dieser betreffenden Lichtdetektoren entsprechend mit einem Lichtpuls von einem zugeordneten Lichtsender beaufschlagt wird.

Zur Auswertung der Signale der Lichtdetektoren bzw. der Verstärker hat die Auswerteschaltung eine Erkennungseinheit, die innerhalb des durch die Pulsflanken eines Lichtpulses vorgegebenen Zeitraums das Signal oder das verstärkte Signal des entsprechenden Lichtdetektors daraufhin prüft, ob der Lichtpuls durch den betreffenden Lichtdetektor empfangen wurde. Die Erkennungseinheit prüft hierbei natürlich das Signal oder das verstärkte Signal desjenigen Lichtdetektors bzw. derjenigen Lichtdetektoren, deren zugeordnete Lichtsender in dem betreffenden Zeitraum einen Lichtpuls ausgesandt haben. Nicht geprüft werden in dem besagten Zeitraum selbstverständlich diejenigen Lichtdetektoren, deren zugeordnete Lichtsender in dem Zeitraum keinen Lichtpuls aussenden.

Besonders vorteilhaft wird man während des betreffenden Zeitraums häufiger als einmal das Vorhandensein des Signales prüfen, um etwaige Zeitverschiebungen zu kompensieren. Die Auswerteschaltung sollte dann ein eine Kollision anzeigendes Signal abgeben, wenn wenigstens ein Puls als nichtvorhanden detektiert wurde. Um zu verhindern, daß eine Kollision bereits schon dann angezeigt wird, wenn beispielsweise durch ein Staubkorn in einem ganz kurzen Zeitintervall einer der Strahlen abgeschattet wurde, macht es Sinn das die Kollision anzeigende Signal erst dann abzugeben, wenn nacheinander mehrere Lichtpulse als nicht vorhanden detektiert wurden.

Als verfahrbares Maschinenteil kommen hier verschiedenste Maschinenteile in Betracht. Beispielsweise könnte es sich um den verfahrbaren Arm eines Fräsers handeln. Insbesondere ist der Kollisionsschutz jedoch für Koordinatenmeßgeräte konzipiert und kann dort an allen beweglichen Teilen befestigt werden. Beispielsweise kann es sich bei dem bewegten Bauteil um den horizontalen Meßarm eines Ständermeßgerätes handeln oder um den Meßarm eines Portalkoordinatenmeßgerätes, der dann vertikal ausgerichtet ist. Natürlich kann gleichfalls aber auch beispielsweise der vertikal ausgerichtete Ständer eines Ständermeßgerätes, an dem sich der Kreuzschieber bewegt, mit dem betreffenden Kollisionsschutz gegen eine Kollision geschützt werden.

Der Kollisionsschutz kann hierbei an einem starren Bauteil angebracht werden, z.B. an einem kranähnlichen Ausleger, so daß der Abstand zwischen Lichtsender und Lichtdetektor konstant bleibt. Er kann aber insbesondere bei Koordinatenmeßgeräten auch so eingesetzt werden, daß die Lichtschranken zwischen dem sich bewegenden Bauteil und dem relativ dazu stillstehenden Bauteil aufgespannt werden, so daß sich der Abstand zwischen den Lichtsendern und den Lichtdetektoren laufend ändert. Damit an den Lichtdetektoren immer ein gleich starkes Signal abgegriffen werden kann, sollte dann die Sendeschaltung eine Intensitätssteuerung aufweisen, die die Intensität der Lichtpulse verändert. Eine Möglichkeit die Intensität entsprechend nachzustellen besteht beispielsweise darin, den Abstand zwischen dem Lichtsender und dem Lichtdetektor zu messen und in Abhängigkeit vom Abstand über die besagte Intensitätssteuerung die Intensität nachzusteuern. Der Abstand kann beispielsweise bezogen auf den Meßarm eines Koordinatenmeßgerätes einfach dadurch bestimmt werden, indem der bei Koordinatenmeßgeräten ohnehin vorhandene Maßstab abgetastet wird und in Abhängigkeit von der aktuellen Position des Meßarms die Intensität entsprechend eingestellt wird. Eine andere Möglichkeit in der Steuerung der Intensität besteht beispielsweise darin die Intensität in Abhängigkeit von den an den Lichtdetektoren detektierten Lichtsignalen kontinuierlich so lange nachzuregeln, bis die Lichtdetektoren ihr kalibriertes Ausgangssignal abgeben. Weitere Vorteile und Weiterbildungen der Erfindung ergeben sich aus den Figuren, die ein bevorzugtes Ausführungsbeispiel darstellen. Hierin zeigen:
- Figur 1: ein Koordinatenmeßgerät in Ständerbauweise mit einem erfindungsgemäßen Kollisionsschutz;
- Figur 2: eine Prinzipsschaltung eines erfindungsgemäßen Kollisionsschutzes;
- Figur 3: eine weitere Prinzipschaltung des erfindungsgemäßen Kollisionsschutzes; und
- Figur 4: ein Impulsdiagramm für zwei selektive Verstärker (V₁) und (V₅) gemäß Figur 3.

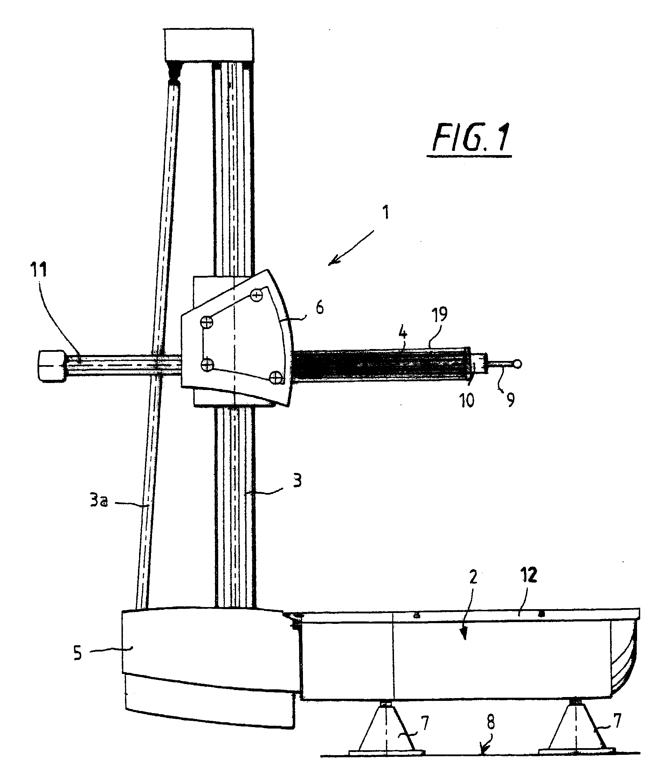

Figur 1 zeigt ein Koordinatenmeßgerät in Ständerbauweise in der Seitenansicht mit einem erfindungsgemäßen Kollisionsschutz. Das Koordinatenmeßgerät weist einen Meßtisch (2) auf, auf dessen Oberseite sich eine plane Meßtischplatte (12) befindet, und welcher über Stützböcke (7) auf dem Fundament (8) gelagert ist. Seitlich am Meßtisch (2) ist in Richtung der Zeichenebene ein Fuß (5) an entsprechenden Führungen geführt, welcher einen vertikalen Ständer (3) trägt. An dem Ständer (3) ist in vertikaler Richtung wiederum der Kreuzschieber (6) verschieblich gelagert, an dem seinerseits der Meßarm (4) in horizontaler Richtung bewegt werden kann. An den entsprechenden Führungen sind jeweils Maßstäbe (11) befestigt, die von entsprechenden optischen Abtastköpfen abgelesen werden können. Bei einer Berührung eines zu vermessenden Werkstückes mit einem Taststift (9) wird im Tastkopf (10) ein entsprechender Schalter geöffnet, der die Berührung mit einem Werkstück detektiert. In dem betreffenden Moment werden dann die Maßstabswerte ausgelesen und als entsprechende Koordinatenmeßwerte weiter verarbeitet. Zum Schutz des Meßarms (4) vor einer Berührung beispielsweise mit dem Bediener oder mit einem zu vermessenden Werkstück sind um den Meßarm (4) herum eine Vielzahl von Lichtschranken (19) gelegt, die sich zwischen den am Kreuzschieber (6) befestigten Lichtsendern und den am Ende des Meßarms am Tastkopf (10) befestigten Lichtdetektoren aufspannt. Bei Kollision des Meßarms (4) mit einem Werkstück oder dem Bediener des Koordinatenmeßgerätes werden einer oder mehrere der Lichtstrahlen unterbrochen, was durch die Lichtschranken (19) detektiert wird wodurch automatisch die Antriebe des Koordinatenmeßgerätes stillgesetzt werden.

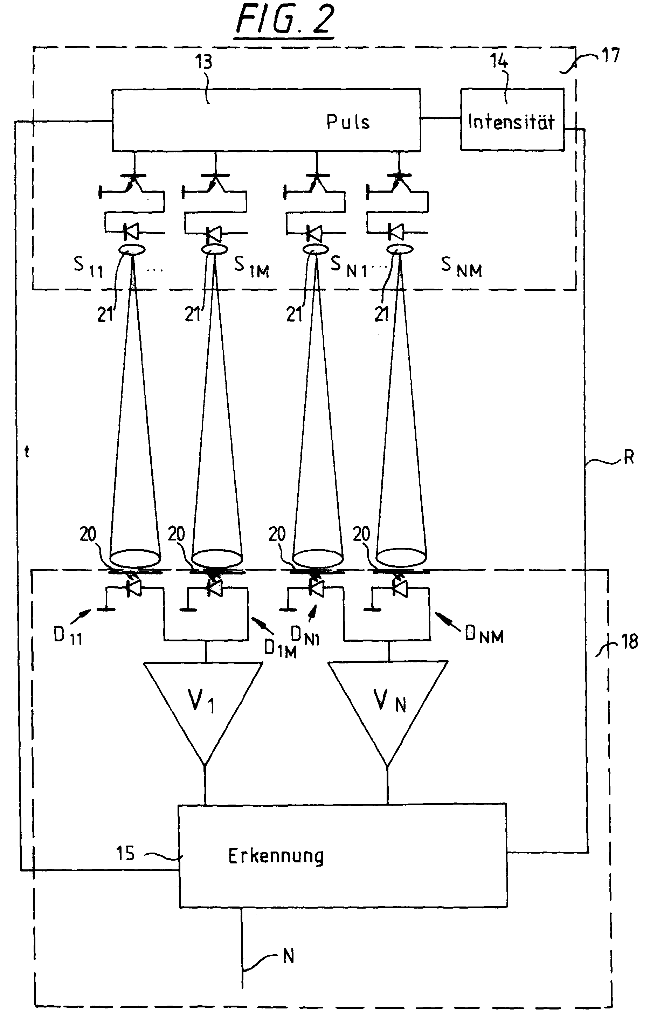

Der Aufbau des erfindungsgemäßen Kollisionsschutzes soll nunmehr an Hand von Figur 2 erläutert werden. Wie aus Figur 2 zu sehen ist weist der Kollisionsschutz im wesentlichen eine Sendeschaltung (17) und eine Auswerteschaltung (18) auf Die Sendeschaltung (17) weist hierbei eine Pulseinheit (13) auf, an die hierbei eine Vielzahl von Lichtsendern (S₁₁, S_{1M}, S_{N1}, S_{NM}) angeschlossen sind, wobei die Lichtsender hierbei in Form von Infrarotdioden vorliegen. Es sei an dieser Stelle darauf hingewiesen, daß die hier nur ausschnittsweise gezeigten vier Lichtsender stellvertretend für eine weit größere Vielzahl an Lichtsendern steht. Die genaue Indizierung der Lichtsender (S₁₁, S_{1M}, S_{N1}, S_{NM}) wird weiter unten im Zusammenhang mit der Auswerteschaltung (18) erläutert werden. Den Lichtsendern (S₁₁, S_{1M}, S_{N1}, S_{NM}) sind hierbei Linsen (21) vorgeschaltet, die das ausgesandte Licht bündeln.

Die Auswerteschaltung (18) wiederum weist eine Vielzahl von Lichtdetektoren (D₁₁, D_{1M}, D_{N1}, D_{NM}) in Form von Fotodioden auf, wobei in diesem speziellen Ausführungsbeispiel jeder Lichtdetektor exakt einem Lichtsender zugeordnet ist. Das heißt also der Lichtdetektor (D₁₁) ist dem Lichtsender (S₁₁) zugeordnet, der Lichtdetektor (D_{1M}) ist dem Lichtsender (S_{1M}) zugeordnet usw.. Die Lichtdetektoren (D₁₁, D_{1M}, D_{N1}, D_{NM}) sind mit hier nur schematisch dargestellten Infrarotfiltern (20) versehen, die das einfallende Licht infrarot filtern. Die Lichtsender ihrerseits in der Auswerteschaltung sind ferner an einen selektiven Verstärker (V₁, V_{N}) angeschlossen, der wie bereits gesagt die Signale der Lichtdetektoren über einen geeigneten Bandpaß filtert und nur die gefilterten Anteile der Signale verstärkt. Ein derartiger selektiver Verstärker wird beispielsweise von der Firma Linear Technology unter der Bezeichnung Multiple Modulation Standard Infrared Receiver mit der Produktnummer LT 1319 vertrieben. Wie dem zugehörigen Datenblatt des betreffenden selektiven Verstärkers zu entnehmen ist, kann das Filterverhalten des Verstärkers durch entsprechendes Beschalten mit Kondensatoren und Spulen entsprechend geändert und an die durch die Lichtsender (S₁₁, S_{1M}, S_{N1}, S_{NM}) erzeugten Lichtpulse angepaßt werden.

Derartige selektive Verstärker sind derzeit noch vergleichsweise teuer, so daß in dem hier gezeigten besonders vorteilhaften Ausführungsbeispiel immer mehrere Lichtdetektoren an jeweils einem selektiven Verstärker angeschaltet sind. Hierdurch ergibt sich auch die Indizierung der Lichtsender (S₁₁, S_{1M}, S_{N1}, S_{NM}) und der entsprechenden zugeordneten Lichtdetektoren (D₁₁, D_{1M}, D_{N1}, D_{NM}). Die erste Stelle im Index gibt hierbei die Nummer des selektiven Verstärkers an, an den die Lichtdetektoren (D₁₁, D_{1M}, D_{N1}, D_{NM}) angeschlossen sind und dem dementsprechend die entsprechenden Lichtsender (S₁₁, S_{1M}, S_{N1}, S_{NM}) zugeordnet sind. Die zweite Stelle im Index gibt die Nummer des entsprechenden dem betreffenden selektiven Verstärker zugeordneten Lichtdetektors bzw. des dem Lichtdetektors zugeordneten Lichtsenders an. Die Bezeichnungen N und M stehen hierbei rein symbolisch für die Zahl der letzten entsprechenden Komponente.

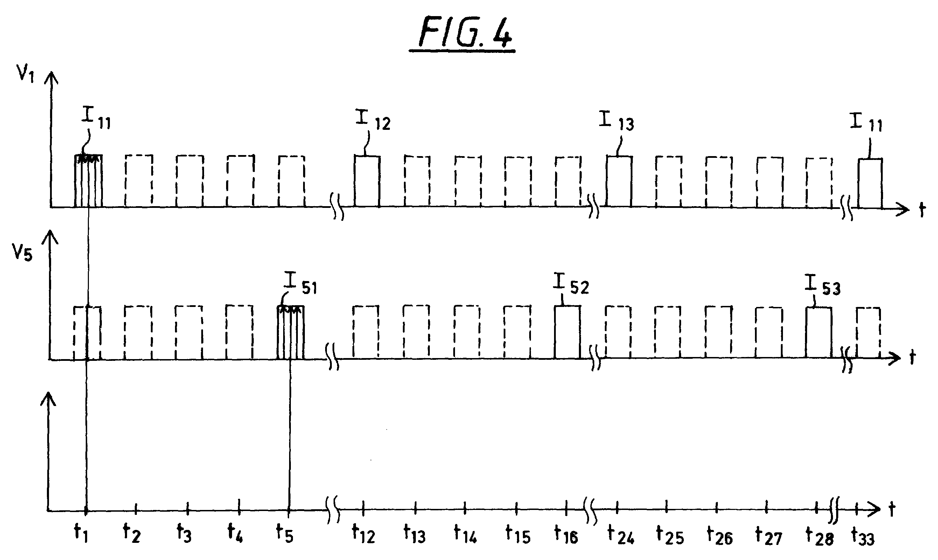

Die Zahl der entsprechenden Lichtdetektoren (D₁₁, D_{1M}, D_{N1}, D_{NM}) die an einen selektiven Verstärker (V₁) bzw. (V_{N}) angeschlossen werden können wäre prinzipiell beliebig groß. Da der Kollisionsschutz jedoch relativ schnell bei einer Kollision reagieren muß, ist es zweckmäßig durch jeden der Sender mehrfach innerhalb einer Sekunde einen Lichtimpuls auszusenden, so daß bedingt durch den Frequenzgang der selektiven Verstärker maximal vier Lichtdetektoren an einen selektiven Verstärker angeschlossen werden sollten. Die selektiven Verstärker (V₁ bzw. V_{N}) wiederum sind an eine Erkennungseinheit (15) angeschlossen, die das Vorhandensein eines Lichtpulses an den Lichtdetektoren (D₁₁, D_{1M}, D_{N1}, D_{NM}) prüft, indem zu dem Zeitpunkt, zu dem der zugeordnete Lichtsender (S₁₁, S_{1M}, S_{N1}, S_{NM}) einen Lichtpuls ausgesandt hat, abgeprüft wird ob von dem entsprechenden zugeordneten selektiven Verstärker (V₁ oder V_{M}) ein entsprechendes Signal verfügbar ist. Zur dazu notwendigen Synchronisierung zwischen der Pulseinheit (13) und der Erkennungseinheit (15) ist eine Leitung (t) vorgesehen, die bei jedem abgesandten Lichtpuls eine Taktflanke an die Erkennungseinheit (15) überträgt. Die detaillierte Auswertung der Signale wird noch weiter unten im Zusammenhang mit Figur 4 beschrieben werden. Sind hierbei mehrfach hintereinander von einem der Lichtsender die entsprechenden Lichtpulse nicht vorhanden, so sendet die Erkennungseinheit an die Maschinensteuerung ein Signal (N) das einen Notstopp der Maschinenantriebe veranlaßt.

Wie bereits eingangs in der Beschreibungseinleitung erwähnt, verändert sich laufend der Abstand zwischen den Lichtsendern (S₁₁. S_{1M}. S_{N1}. S_{NM}) und den Lichtdetektoren (D₁₁, D_{1M}, D_{N1}, D_{NM}), da die Lichtsender (S₁₁. S_{1M}. S_{N1}, S_{NM}) am Kreuzschieber (6) des Koordinatenmeßgerätes befestigt sind, während die Lichtdetektoren (D₁₁, D_{1M}, D_{N1}, D_{NM}) am tastkopfseitigen Ende des Meßarms (4) befestigt sind. Da sich der Meßarm (4) laufend gegenüber dem Kreuzschieber (6) in horizontaler Richtung bewegt, wird hierdurch auch der besagte Abstand ständig verändert. Hierdurch ändern sich selbstverständlich auch die Intensitäten der durch die Lichtdetektoren (D₁₁, D_{1M}, D_{N1}, D_{NM}) empfangenen Signale. Um die für die Auswertung der durch die Lichtdetektoren (D₁₁, D_{1M}, D_{N1}, D_{NM}) notwendigen konstanten Signale zu erhalten, weist die Sendeschaltung (17) zusätzlich eine Intensitätseinheit (14) auf, die die Intensität der Lichtsender (S₁₁, S_{1M}, S_{N1}, S_{NM}) jeweils an den aktuellen Abstand anpaßt. Die Anpassung kann, wie bereits oben beschrieben, erfolgen, indem in Abhängigkeit von der Position des Meßarmes (4) die Intensität entsprechend gesteuert wird. Die aktuelle Position läßt sich bei einem Koordinatenmeßgerät einfach bestimmen, da der Meßarm (4) einen Maßstab (11) aufweist, der von einem im Kreuzschieber (6) befestigten optischen Abtastkopf abgetastet wird, so daß zu jedem Zeitpunkt die genaue Position des Meßarms (4) in Bezug auf den Kreuzschieber (6) bekannt ist. In einer anderen Ausführungsform, die hier in Figur 2 gezeigt ist, kann die Intensitätseinheit (14) die durch die Lichtsender (S₁₁, S_{1M}, S_{N1}, S_{NM}) abgegebene Intensität individuell regeln, indem die zu jedem Lichtdetektor (D₁₁, D_{1M}, D_{N1}, D_{NM}) zugehörigen durch die selektiven Verstärker (V₁, V_{N}) verstärkten Signale auf die Intensitätseinheit (14) über die Leitung (R) zurückgekoppelt werden. Hierdurch können insbesondere Unregelmäßigkeiten der verschiedenen elektronischen Komponenten, die sich insbesondere auch erst im Laufe der Zeit ergeben können, besser ausgeglichen werden, da beispielsweise ein sich änderndes Intensitätsverhalten eines einzelnen Lichtsenders individuell durch die Intensitätseinheit (14) ausgeregelt werden kann.

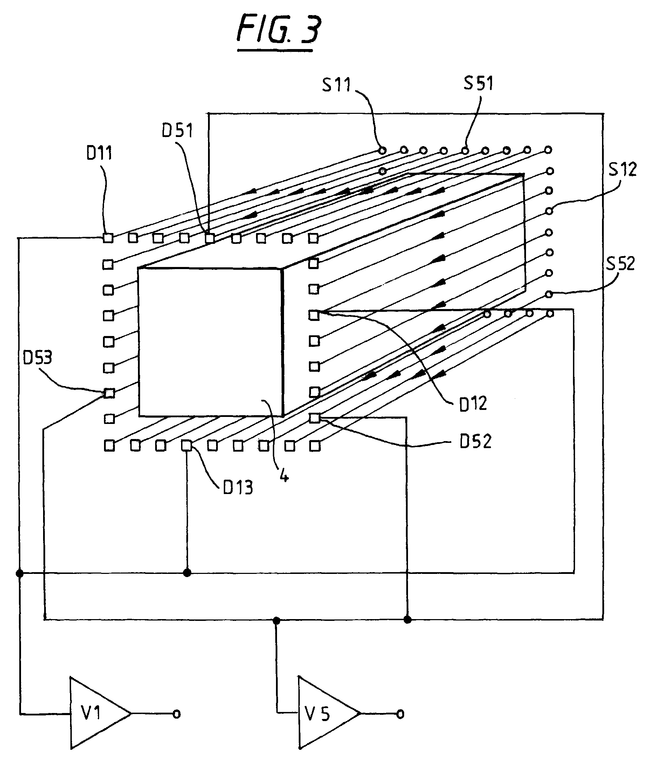

Eine Anordnung der Lichtsender und der Lichtdetektoren um den Meßarm (4) herum und die entsprechende Zuordnung zu selektiven Verstärkern, soll hierbei rein schematisch und beispielhaft an Hand von Figur 3 für zwei selektive Verstärker (V₁) und (V₅) erläutert werden. Wie hierbei zu sehen ist, sind um den gesamten Meßarm (4) herum eine Vielzahl von durch Kreisen repräsentierten Lichtsendern angeordnet. die den gesamten Meßarm umgeben. Am anderen Ende des Meßarm (4) wiederum sind eine Vielzahl von durch Quadrate repräsentierten Lichtdetektoren vorhanden, die jeweils einem entsprechenden Lichtsender zugeordnet sind. Die mit (D₁₁, D₁₂ und D₁₃) bezeichneten Lichtdetektoren sind hierbei alle gemeinsam mit dem selektiven Verstärker (V₁) verbunden. Die mit (D₅₁, D₅₂ und D₅₃) bezeichneten Lichtdetektoren sind hingegen mit dem selektiven Verstärker (V₅) verbunden. Wie hierbei aus der Skizze gemäß Figur 3 zu ersehen ist, sind hierbei die einem selektiven Verstärker (V₁ bzw. V₅) zugeordneten Lichtdetektoren (D₁₁, D₁₂ und D₁₃ bzw. D₅₁, D₅₂ und D₅₃) und damit auch die den Lichtdetektoren zugeordneten Lichtsender (S₁₁, S₁₂ und S₁₃ bzw. S₅₁, S₅₂ und S₅₃) so angeordnet, daß das Licht eines dieser Lichtsender nur auf den einen zugeordneten Lichtdetektor dieser Lichtdetektoren fallen kann, während die beiden anderen Lichtdetektoren, die ebenfalls an den betreffenden selektiven Verstärker angeschlossen sind durch den Meßarm (4) abgeschattet werden. Hierdurch kann sicher verhindert werden, daß irrtümlich durch den selektiven Verstärker (V₁) oder (V₅) ein Signal abgegeben wird, obwohl der zugeordnete Lichtstrahl durch eine Kollision unterbrochen wurde. Dies sei an Hand eines Beispiels deutlich gemacht. Sendet beispielsweise der Lichtsender (S₁₁) einen Lichtstrahl aus, so kann dieser Lichtstrahl nur vom zugeordneten Lichtdetektor (D₁₁) erfaßt werden. Die beiden anderen Lichtdetektoren (D₁₂ und D₁₃), die ebenfalls am selben betreffenden selektiven Verstärker (V₁) angeschlossen sind werden hingegen durch den Meßarm (4) abgeschattet, so daß bei Unterbrechung des zwischen dem Lichtsender (S₁₁) und dem Lichtdetektor (D₁₁) vorhandenen Lichtstrahls durch den selektiven Verstärker (V₁) kein Signal abgegeben werden kann.

Im folgenden sollen nunmehr an Hand von Figur 4 für das in Figur 3 gegebene Beispiel gezeigt werden, in welcher Art und Weise die Lichtpulse ausgewertet werden. Hierzu zeigt das erste Diagramm von Figur 4 die Signale des selektiven Verstärkers (V₁), das zweite Diagramm die Signale des selektiven Verstärkers (V₅) und das untere Diagramm einen Zeitstrahl mit verschiedenen Zeitpunkten die von (t₁) bis (t₃₃) durchnummeriert sind, wobei aus Platzgründen die Zeitpunkte (t₆ bis t₁₁, t₁₇ bis t₂₃ und t₂₉ bis t₃₂) aus dem Diagramm herausgeschnitten wurden. Die Sendeschaltung ist in dem hier gezeigten Ausführungsbeispiel derart betrieben, daß die Lichtsender anfangend vom Lichtsender (S₁₁) nacheinander, ähnlich einem Lauflicht. einen Lichtpuls abgeben, so daß zu einem Zeitpunkt immer nur ein einziger Sender sein Licht aussendet. Obwohl diese Ausführungsform besonders vorteilhaft ist, da jeder auftretende Lichtpuls an Hand dem Zeitpunkt, zu dem er auftritt eindeutig einem Lichtsender zugeordnet werden kann, sei noch einmal ausdrücklich darauf hingewiesen, daß es selbstverständlich in alternativen Ausführungsformen genauso möglich ist, von mehreren Lichtsendern gleichzeitig einen Lichtpuls auszusenden. Eine wesentliche Bedingung ist dann hierbei, daß die den Lichtsendern zugeordneten Lichtdetektoren nicht von den anderen gleichzeitig gepulsten Lichtsendern das ausgesandte Licht empfangen können. Sollten hierbei analog zu dem im Zusammenhang mit den Figuren beschriebenen Ausführungsbeispiel mehrere Lichtdetektoren an einem Verstärker bzw. einem selektiven Verstärker angeschlossen sein, so gelten außerdem analog die weiter oben in diesem Zusammenhang bereits beschriebenen Einschränkungen, daß die einem selektiven Verstärker zugeordneten Lichtdetektoren und Lichtsender so anzuordnen sind, daß jeder dieser betreffenden Lichtsender nur auf den einen zugeordneten Lichtdetektor dieser Lichtdetektoren sein Licht senden kann.

Wie an dem ersten Diagramm zu sehen ist, wird zum Zeitpunkt (t₁) vom selektiven Verstärker (V₁) ein Signal (I₁₁) geliefert. Es handelt sich hierbei um dasjenige selektiv verstärkte Signal des Lichtdetektors D₁₁), der einen Lichtpuls vom zugeordneten Lichtsender (S₁₁) empfangen hat. Wie symbolisch an Hand der drei Pfeile in dem ebenfalls mit (I₁₁) bezeichneten Lichtpuls zu sehen ist, wird von der Erkennungseinheit (15) während des Pulses zu drei verschiedenen Zeitpunkten das Vorhandensein des Lichtpulses geprüft. Zu den Zeitpunkten (t₂) bis (t₄) wird von der Erkennungseinheit (15) weder am selektiven Verstärker (V₁) noch am selektiven Verstärker (V₅) ein Signal geprüft, da zu diesen Zeitpunkten von keinem Lichtsender ein Signal gesandt wird, welches für die an die selektiven Verstärker (V₁) und (V₅) angeschlossenen Lichtdetektoren bestimmt ist. Dies wird dadurch verdeutlicht, daß die entsprechenden Lichtpulse nur strichliniert angedeutet sind. Zu den Zeitpunkten (t₂) bis (t₄) wird nämlich von den Lichtsendern (S₂₁, S₃₁, S₄₁), die in Figur 3 nicht mit Bezugszeichen versehen sind, ein Lichtpuls gesandt. Der Lichtpuls wird zwar möglicherweise durch die Streuung des Lichts von den an den selektiven Verstärkern (V₁) und (V₅) anliegenden Lichtdetektoren (D₁₁) und (D₅₁) empfangen, jedoch werden derartige Pulse nicht ausgewertet, weil zu den betreffenden Zeitpunkten von den zugeordneten Lichtsendern (S₁₁) und (S₅₁) kein Lichtpuls ausgesandt wurde. Zum Zeitpunkt (t₅) dann jedoch, wird vom Lichtsender (S₅₁) ein Lichtpuls gesandt, der vom Lichtdetektor (D₅₁) empfangen wird, so daß nunmehr der selektive Verstärker (V₅) ein entsprechendes Signal liefert. Auch dieser vom selektiven Verstärker (V₅) gelieferte Puls wird von der Erkennungseinheit (15) dreimal abgetastet um sicherzugehen, daß dieser vorhanden ist. In den Zeitpunkten (t₆) bis (t₁₁) wiederum werden die Signale der selektiven Verstärker (V₁) und (V₅) nicht ausgewertet. Im Zeitpunkt (t₁₂) wird jedoch wieder vom Lichtsender (S₁₂) ein Lichtpuls ausgesandt, der vom zugehörigen Lichtdetektor (D₁₂) detektiert wird und als entsprechendes Signal (I₁₂) am selektiven Verstärker (V₁) sichtbar ist. Zum Zeitpunkt (t₁₆) wiederum liefert der selektive Verstärker (V₅) ein Signal (I₅₂), das vom Lichtdetektor (D₅₂) verstärkt wurde, zum Zeitpunkt (t₂₄) liefert der selektive Verstärker (V₁) wiederum ein Signal (I₁₃) das vom Lichtdetektor (D₁₃) empfangen wurde und zum Zeitpunkt (t₂₈) verstärkt der selektive Verstärker (V₅) wiederum das Signal (I₅₃) des Lichtdetektors (D₅₃). Zum Zeitpunkt (t₃₃) wird erneut vom selektiven Verstärker (V₁) ein Signal geliefert, das dieses Mal erneut durch Verstärkung des Signals (I₁₁) vom Lichtdetektor (D₁₁) erzeugt wurde.

## Patentansprüche

1. Optischer Kollisionsschutz für bewegte Maschinenteile (4) in Form einer Lichtschranke umfassend eine Sendeschaltung (17) mit einer Vielzahl von nebeneinander angeordneten pulsierend betriebenen Lichtsendern (S₁₁ ... S_{NM}) und einer Auswerteschaltung (18) mit wenigstens einem Lichtdetektor (D₁₁), dadurch gekennzeichnet daß, die Lichtpulse zumindest zweier Lichtsender immer zu unterschiedlichen Zeitpunkten (t₁ , t₂ ...) ausgesandt werden.

2. Optischer Kollisionsschutz nach Anspruch 1, dadurch gekennzeichnet, daß die Auswerteschaltung wenigstens einen Verstärker (V₁, V₅, V_{N}) umfaßt, der das Signal des Lichtdetektors (D₁₁ ... D_{NM}) verstärkt.

3. Optischer Kollisionsschutz nach Anspruch 2, dadurch gekennzeichnet, daß der Verstärker ein selektiver Verstärker (V₁, V₅, V_{M}) ist, der das Signal des Lichtdetektors (D₁₁ ... D_{NM}) filtert und nur die gefilterten Bestandteile verstärkt.

4. Kollisionsschutz nach Anspruch 2 oder 3, dadurch gekennzeichnet, daß wenigstens zwei Lichtdetektoren (D₁₁, D₁₂, D₁₃) gemeinsam an einen Verstärker oder insbesondere an einen selektiven Verstärker (V₁) angeschlossen sind.

5. Kollisionsschutz nach Anspruch 4, dadurch gekennzeichnet, daß alle dem Verstärker oder insbesondere dem selektiven Verstärker (V₁) zugeordneten Lichtsender (S₁₁, S₁₂, S₁₃) und Lichtdetektoren (D₁₁, D₁₂, D₁₃) derart angeordnet sind, daß jeder dieser betreffenden Lichtdetektoren das Licht des jeweils zugeordneten Lichtsenders empfangen kann und das Maschinenteil (4) die Lichtstrahlen der restlichen dem selektiven Verstärker zugeordneten Lichtsender abschattet.

6. Kollisionsschutz nach Ansprüchen 1 bis 5, dadurch gekennzeichnet, daß die Auswerteschaltung eine Erkennungseinheit (15) aufweist, die innerhalb des durch die Pulsflanken eines Lichtpulses vorgegebenen Zeitraums das Signal (I₁₁, I₁₂, I₁₃) des Lichtdetektors bzw. dessen verstärktes Signal daraufhin prüft, ob der Lichtpuls durch den Lichtdetektor empfangen wurde.

7. Kollisionsschutz nach Anspruch 6. dadurch gekennzeichnet, daß während des Zeitraums wenigstens zweimal das Vorhandensein des Lichtpulses geprüft wird.

8. Kollisionsschutz nach Anspruch 6 oder 7, dadurch gekennzeichnet, daß die Auswerteschaltung (18) dann ein eine Kollision anzeigendes Signal (N) abgibt, wenn wenigstens ein Lichtpuls als Nichtvorhanden detektiert wurde.

9. Kollisionsschutz nach Anspruch 8, dadurch gekennzeichnet, daß das eine Kollision anzeigende Signal (N) dann abgegeben wird, wenn nacheinander mehrere Lichtpulse als Nichtvorhanden detektiert wurden.

10. Kollisionsschutz nach Ansprüchen 1 bis 9, dadurch gekennzeichnet, daß das verfahrbare Maschinenteil der Meßarm (4) eines Koordinatenmeßgerätes ist.

11. Kollisionsschutz nach Ansprüchen 1 bis 10, dadurch gekennzeichnet, daß die Sendeschaltung (17) eine Intensitätssteuerung (14) aufweist, die die Intensität der Lichtpulse verändert.

12. Kollisionsschutz nach Anspruch 11, dadurch gekennzeichnet, daß die Intensitätssteuerung die Intensität in Abhängigkeit vom Abstand zwischen dem Lichtsender und dem Lichtdetektor verstellt.

13. Kollisionsschutz nach Anspruch 11, dadurch gekennzeichnet, daß die Intensitätssteuerung die Intensität in Abhängigkeit vom durch den Lichtdetektor empfangenen Signal nachregelt.

14. Kollisionsschutz nach Ansprüchen 1 bis 13, dadurch gekennzeichnet, daß die Lichtsender Infrarotdioden sind.

15. Kollisionsschutz nach Anspruch 14, dadurch gekennzeichnet, daß die Lichtdetektoren ein vorgeschaltetes Infrarotfilter (20) aufweisen.

16. Kollisionsschutz nach Ansprüchen 1 bis 15, dadurch gekennzeichnet, daß nur ein einziger Lichtsender zur Zeit einen Lichtpuls aussendet.
